# EUROPEAN PATENT SPECIFICATION

(11) **EP 2 882 113 B1**
(45) Date of publication and mention of the grant of the patent: **15.11.2017**
(21) Application number: 12882130.3
(22) Date of filing: 30.07.2012
(51) Int. Cl.: H04B 10/114, H04B 10/564, G02B 6/42

(54) **ELECTRICAL DEVICE**
ELEKTRISCHE VORRICHTUNG
DISPOSITIF ÉLECTRIQUE

(43) Date of publication of application: 10.06.2015
(73) Proprietor: Fuji Machine Mfg. Co., Ltd., Chiryu-shi, Aichi 472-8686 (JP)
(72) Inventor: NAGASAKA, Nobuo, Chiryu-shi Aichi 472-8686 (JP); JINDO, Takahiro, Chiryu-shi Aichi 472-8686 (JP); HIROTA, Shigemoto, Chiryu-shi Aichi 472-8686 (JP); IMADERA, Yasuaki, Chiryu-shi Aichi 472-8686 (JP); NAGASE, Yoshihiko, Chiryu-shi Aichi 472-8686 (JP)
(74) Representative: Grünecker Patent- und Rechtsanwälte PartG mbB
(86) International application number: PCT/JP2012/069312
(87) International publication number: WO 2014/020658

(56) References cited:
- EP-A1- 0 759 055
- EP-A2- 0 305 927
- JP-A- 2001 036 467
- JP-A- 2005 235 942
- JP-A- 2007 028 264
- JP-B2- 3 144 857
- US-A- 5 229 593

## Description

### Technical Field

The present invention relates to an electric apparatus for radio-transmitting signals between devices by using an optical signal and particularly, in a non-normal operating state, relates to an electric apparatus which considers the safety for a human body when using the optical signal for radio transmission.

### Background Art

Regarding a device using a laser beam, safety standards such as international laser safety standards IEC60825 or its equivalent domestic standards for each country have been established. For example, according to IEC60825-1, the safety standards are divided into classes of class 1 to class 4 based on output power, and manufacturers and users are obliged to comply with various safety consideration matters defined in each class. In a case of the highest safety class 1, safety consideration matters to comply with are not included, and thus it is possible to freely use the laser beam which is likely to be contacted with human bodies.

Conventionally, a technology relating to an optical transmission device transmitting a main signal and a supervisory channel by combining with each other has been disclosed, in which OSC control means for controlling the supervisory channel includes at least two modes, that is, a normal communication mode and a connection confirmation mode for calculating a time average value of the transmission power of the supervisory channel, in the connection confirmation mode, a signal is controlled to be transmitted with the time-average power lower than the maximum power value based on the laser safety standards, and in the normal communication mode, a signal is controlled to be transmitted with the time-average power exceeding the maximum power value based on the laser safety standards (refer to JP-A-2011-147086).

US 5 229 593 A discloses a free space laser communication system that operates at two power levels. The system includes a microprocessor to control the laser output beam to a safety level when the input beam indicates that the output beam is not being received at the remotely positioned terminal. If the output beam is not being received by the remotely positioned terminal, a blockage or misalignment of the beam is indicated. During normal operation when a blockage or misalignment of the beam is not detected, the output beam may be operated at a level higher than a safety limit to thereby provide enhanced communication performance.

### Disclosure of Invention

### Technical Problem

In adjustment work of an electric apparatus such as an electronic component supply device having an optical radio communication device mounted thereon, actually, the adjustment is performed while confirming image data for inspection of the electronic component supply device and operating an XY stage or the like in a state of temporarily removing a protective cover which is provided for safety consideration. Even in this case, communication through the laser beam is necessary for obtaining the image data for inspection or for performing operations such as the XY stage. For safety consideration with respect to the laser beam, workers are required to work while ensuring safety by wearing protective goggles or the like and thus workability of the adjustment work is impaired.

In the technology disclosed in PTL 1, the supervisory channel is a channel dedicated to confirming a connection between the optical transmission devices in the connection confirmation mode, and instead of the transmission of data by a main signal in a normal operating state, the transmission of a connection confirmation signal is performed. PTL 1 merely discloses the technology which controls different transmission powers between the normal communication mode and the connection confirmation mode when the transmission of the connection confirmation signal is performed. In the supervisory channel, the connection confirmation signal may be transmitted so as to confirm the connection between the optical transmission devices, but is not necessary to transmit data transmitted by the main signal in the normal operating state. Therefore, there is no description with respect to the transmission of the same data as that in the normal operating state in the connection confirmation mode. Accordingly, according to the background art disclosed in PTL 1, it is impossible to transmit data necessary for the adjustment work of the electronic component supply device or the like in a situation where safety measures for the laser beam is suspended in a non-normal operating state.

The present invention has been made in view of such circumstances and an object thereof is to provide an electric apparatus which is able to continuously perform radio transmission by using an optical signal based on safety standards in a non-normal operating state such an adjustment work, even if the safety measure for preventing adverse effects of the optical signal on the human body is suspended.

### Technical Solution

In order to solve the above-described problem, according to claim 1 of the present application, an electric apparatus for radio-transmitting a signal between devices by using an optical signal includes a transmission rate setting unit, a light-emitting unit, a light-receiving unit, an emission intensity control unit, and notification means. The transmission rate setting unit sets the transmission rate of the signal transmission. The light-emitting unit emits an optical signal. The light-receiving unit receives an optical signal. The emission intensity control unit sets emission intensity of the optical signal emitted from the light-emitting unit. The notification means notifies a non-normal operating state. The transmission rate setting unit and the emission intensity setting unit, according to the notification means, decrease the transmission rate and the emission intensity of the optical signal while maintaining a bit error rate of the radio transmission set in the normal operating state.

In addition, the electric apparatus according to claim 2 is the electric apparatus according to claim 1, in which in the signal transmission, the optical signal pertaining to image data requiring a first band in the device and other signals requiring a second band lower than the first band in the device is multiplexed. The transmission rate is decreased so as not to be lower than that of the second band in the aforementioned other signals.

Further, the electric apparatus according to claim 3 is the electric apparatus according to claim 2, and the decrease in the transmission rate includes a case where the transmission of the image data is suspended.

Moreover, the electric apparatus according to claim 4, which is the electric apparatus according to any one of claims 1 to 3, further includes a shielding member. The shielding member shields an optical path of the optical signal used for the light-emitting unit, the light-receiving unit, and the radio transmission. The notification means includes an opening and closing detection sensor detecting an opening and closing state of the shielding member.

### Advantageous Effects of Invention

In the electric apparatus according to claim 1, in a case of the non-normal operating state, the transmission rate and the emission intensity are decreased while maintaining the bit error rate of the radio transmission in the normal operating state. Therefore, in the non-normal operating state, it is possible to decrease the emission intensity of the optical signal to the emission intensity based on the safety standards while maintaining the same radio transmission as that in the normal operating state. Here, in the adjustment work performed when forwarding or maintaining devices, the non-normal operating state means an operating state in which the radio transmission is performed while the optical path of the light-emitting unit, the light-receiving unit, and the optical signal is not shielded by a protective cover or the like.

In the electric apparatus according to claim 2, when the optical signal pertaining to the image data and other signals is multiplexed, the transmission rate is decreased so as not to be lower than that of second band necessary for the device regarding other signals in the non-normal operating state. For this reason, in the non-normal operating state, even with the low transmission rate and the emission intensity, it is possible to perform the radio transmission of data necessary for the same operation of the device as in the normal operating state.

In the electric apparatus according to claim 3, the radio transmission of the image data using the optical signal is suspended in the non-normal operating state. For this reason, it is possible to decrease the transmission rate and the emission intensity to the rate not lower than the second band in the non-normal operating state. It is possible to sufficiently decrease the emission intensity while maintaining the band (the second band) of data necessary for the device.

In the electric apparatus according to claim 4, it is possible to detect the non-normal operating state by including the opening and closing detection sensor which detects the opening and closing state of the shielding member.

### Brief Description of Drawings

[Fig. 1] Fig. 1 is a perspective view illustrating a panel work machine which is an example of the present invention.
[Fig. 2] Fig. 2 is a top view illustrating a state where an upper cover of the panel work machine illustrated in Fig. 1 is removed.
[Fig. 3] Fig. 3 is a perspective view illustrating a transporting device which is provided in the panel work machine illustrated in Fig. 1.
[Fig. 4] Fig. 4 is a block diagram illustrating a control centering on a control device which is provided in the panel work machine illustrated in Fig. 1.
[Fig. 5] Fig. 5 is a diagram schematically illustrating a configuration of radio transmission by using an optical signal of the panel work machine illustrated in Fig. 1.
[Fig. 6] Fig. 6 is a block diagram illustrating the control device which is provided in an optical radio device 1.
[Fig. 7] Fig. 7 is a block diagram illustrating the control device which is provided in an optical radio device 3.
[Fig. 8] Fig. 8 is a diagram illustrating a correlationship between a transmission rate and emission intensity of a laser beam in a case where a bit error rate is set to be constant.
[Fig. 9] Fig. 9 is a diagram schematically illustrating a packet PA and data included in the packet PA in the respective transmission rates.

### Best Mode for Carrying Out the Invention

Hereinafter, examples of the present invention will be described in detail with reference to the drawings as a form of performing the present invention.

### <Configuration of panel work machine>

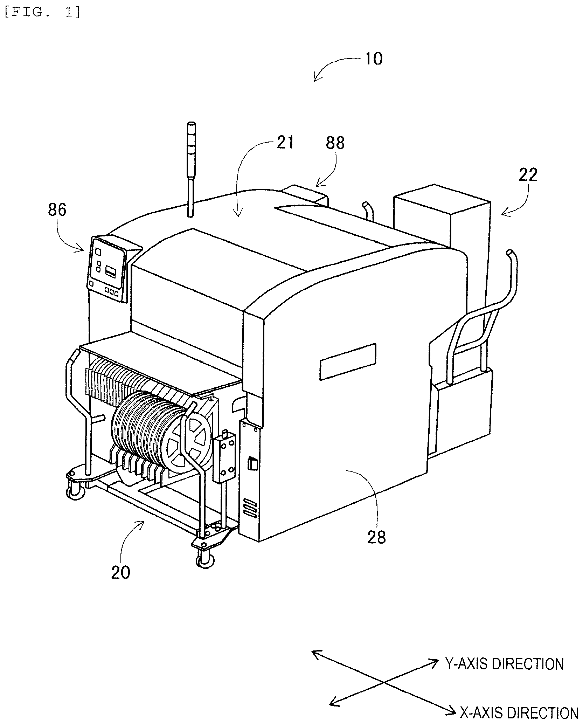

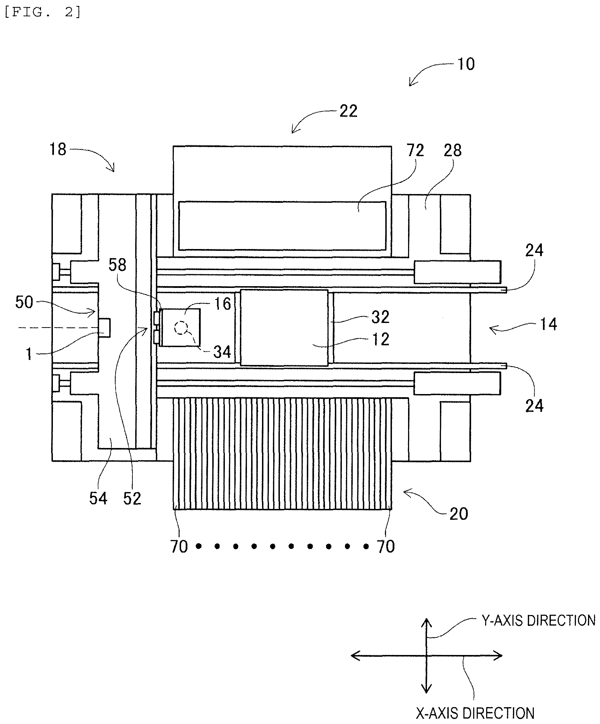

Fig. 1 and Fig. 2 illustrate a panel work machine (hereinafter, referred to as a "work machine" in some cases) 10 which is an example of the present invention. Fig. 1 is a perspective view of the work machine 10 and Fig. 2 is a top view schematically illustrating the work machine 10 in which an upper cover 21 is removed when viewed from above. The work machine 10 is a circuit component mounting device performing a mounting work of circuit components on a circuit board 12 and includes a transporting device 14 which transports the circuit board 12, a mounting head 16 which mounts the circuit components on the circuit board 12, a moving device 18 which moves the mounting head 16, and a pair of supply devices 20 and 22 which supply the circuit component.

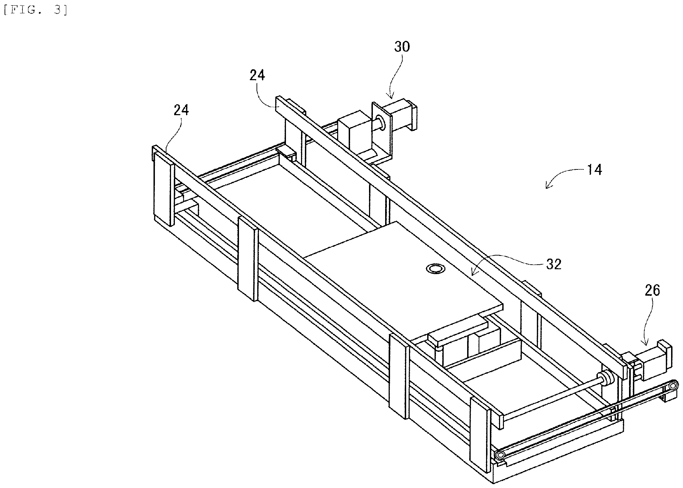

The transporting device 14 includes, as shown in Fig. 3, a pair of conveyor belts 24, and allows the pair of conveyor belts 24 to be rotated by an electromagnetic motor 26 so as to transport the circuit board 12 held by the conveyor belts 24. The pair of conveyor belts 24 are configured such that one can be fixed to a base 28 and the other can be moved by the transporting device 14 in the direction perpendicular to the transport direction of the circuit board 12 such that a conveyer width exchange mechanism 30 can allow the other conveyor belt 24 to be close to or far from the one conveyor belt 24. In other words, the transporting device 14 can change a distance between the pair of conveyor belts 24 so as to transport the circuit boards of different sizes. The transporting device 14 also includes a substrate holding device 32 and fixedly holds the circuit board 12 at a predetermined position (at the position of the circuit board 12 in Fig. 2). Meanwhile, for description of the present example, the transport direction of the circuit board 12 (the longitudinal direction in Fig. 2) by the transporting device 14 is referred to as an X-axis direction and the direction perpendicular to the X-axis direction is referred to as a Y-axis direction.

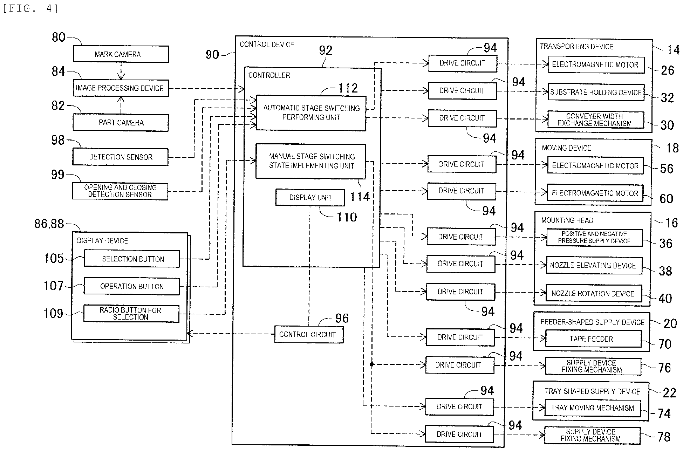

In addition, the mounting head 16 is configured to mount the circuit components on the circuit board 12 held by the transporting device 14 and is a mounting head which includes suction nozzles 34 picking the circuit components on a lower surface. The suction nozzles 34 are connected to a negative pressure air path and a positive pressure air path via a positive and negative pressure supply device 36 (refer to Fig. 4), pick and hold the circuit components at negative pressure, and detach the picked circuit components by slightly supplying positive pressure. Further, the mounting head 16 includes a nozzle elevating device 38 (refer to Fig. 4) which elevates the suction nozzle 34 and a nozzle rotation device 40 (refer to Fig. 4) which allows the suction nozzle 34 to be rotated around its axis and thus it is possible to change positions of the circuit components to be held in the perpendicular direction and change posture of the circuit component being held. Meanwhile, the suction nozzles 34 are detachably attached to the mounting head 16 and thus can be changed according to sizes, shapes, or the like of the circuit components.

The mounting head 16 can be moved to any position on the base 28 by the moving device 18. In detail, the moving device 18 includes an X-axis direction slide mechanism 50 which is for moving the mounting head 16 in the X-axis direction and a Y-axis direction slide mechanism 52 which is for moving the mounting head 16 in the Y-axis direction. The X-axis direction slide mechanism 50 includes an X-axis slider 54 which is provided on the base 28 so as to be movable in the X-axis direction and an electromagnetic motor 56 (refer to Fig. 4) as a driving source, in which the electromagnetic motor 56 makes the X-axis slider 54 move to any position in the X-axis direction. In addition, the Y-axis direction slide mechanism 52 includes a Y-axis slider 58 which is provided on the side surface of the X-axis slider 54 so as to be movable in the Y-axis direction and an electromagnetic motor 60 (refer to Fig. 4) as a driving source, in which the electromagnetic motor 60 makes the Y-axis slider 58 move to any position in the Y-axis direction. Then, by attaching the mounting head 16 to the Y-axis slider 58, the mounting head 16 can be moved to any position on the base 28 by the moving device 18. Meanwhile, the mounting head 16 is detachable from the Y-axis slider 58 at one touch operation and thus it is possible to change different types of the working heads, for example, a dispenser head and the like.

Further, the pair of supply devices 20 and 22 are disposed with the transporting device 14 interposed therebetween on both side portions of the base 28 in the Y-axis direction. One of the pair of supply devices 20 and 22 is a feeder-type supply device 20 and the other is assumed to be a tray-type supply device 22. The feeder-type supply device 20 includes a plurality of tape feeders 70 which hold the taped circuit components and feed the circuit components one by one and the circuit components are supplied to the supply position of the mounting head 16 by the respective of tape feeders 70. On the other hand, the tray-type supply device 22 includes a plurality of component trays 72 on which a plurality of the circuit components are mounted and any one of the plurality of component trays 72 is moved to the supply position of the mounting head 16 by a tray moving mechanism 74 (refer to Fig. 4).

It should be noted that the respective supply devices 20 and 22 are detachable from the base 28 so as to correspond to a lack of the circuit component to be supplied and to replacement of types of the circuit components, and in order to maintain a state where the respective supply devices 20 and 22 are attached to the base 28, that is, in order to fix the respective supply devices 20 and 22 to the base 28, supply device fixing mechanisms 76 and 78 (refer to Fig. 4) are provided. The respective supply devices fixing mechanisms 76 and 78 are switchable between a state in which the supply devices 20 and 22 are locked so as not to be detached from the base 28 and a state of releasing the lock. In other words, it is possible to switch between a state where the replacement of the supply devices 20 and 22 is prohibited and a state where the replacement is allowed.

In addition, the moving device 18 is provided with an optical radio device 1. An optical radio device 3 is provided on the side of a control device 90 as a counterpart of the optical radio transmission. The optical radio device 1 is provided in the X-axis slider 54 of the moving device 18 so that an optical axis thereof coincides with that of the optical radio device 3. Accordingly, it is possible to perform radio transmission of image data, a variety of types of position information, or driving control information through a laser beam, described later, between the optical radio device 1 and the optical radio device 3.

In addition, the work machine 10 includes a mark camera 80 (refer to Fig. 4) and a part camera 82 (refer to Fig. 4). The mark camera 80 is fixed to the lower surface of the Y-axis slider 58 in a state of facing downward and moved by the moving device 18, thereby imaging the surface of the circuit board 12 at an optional position. On the other hand, the part camera 82 is provided in a state of facing upward and can image the circuit component picked and held by the suction nozzles 34 in the mounting head 16. The image data obtained by the mark camera 80 and the image data obtained by the part camera 82 are processed in an image processing device 84 (refer to Fig. 4) and thus it is possible to obtain information on the circuit board 12, a holding position error of the circuit board 12 generated due to the substrate holding device 32, a holding position error of the circuit component generated due to the suction nozzle 34, or the like.

Further, the work machine 10 includes a control device 90 as shown in Fig. 4. The control device 90 includes a controller 92 which is mainly a computer including CPU, ROM, RAM, or the like, a plurality of driving circuits 94 which corresponds to each of the above described electromagnetic motors 26, 56, and 60, the conveyer width exchange mechanism 30, the substrate holding device 32, the positive and negative pressure supply device 36, the nozzle elevating device 38, the nozzle rotation device 40, the tape feeder 70, the tray moving mechanism 74, the supply device fixing mechanisms 76 and 78, and a control circuit 96 of display devices 86 and 88. The controller 92 is connected to the image processing device 84 which processes the image data items obtained by the mark camera 80 and the part camera 82, three detection sensors 98, and an opening and closing detection sensor 99. The three detection sensors 98 are disposed on the base 28 between the pair of conveyor belts 24 in a state of facing upward, one is disposed at an end portion of the side into which the circuit board 12 is transported, another one is disposed at an end portion of the side from which the circuit board is transported, and the other is disposed at a position where the circuit board 12 is held by the substrate holding device 32.

Information which is obtained by the image data processed by the image processing device 84 such as the information on the circuit board 12, holding position information on the circuit board 12, and suction information obtained by the suction nozzle 34 is optically radio-transmitted through the laser beam from the optical radio device 1 which is provided in the moving device 18, is received in the optical radio device 3 which is connected to the control device 90, and then is sent to the controller 92.

In addition, in the controller 92, a driving control command is issued with respect to the respective devices 14, 18, and 16 such as the transporting device, the moving device, and the mounting head via the respective driving circuits 94 so as to control operations of the respective devices 14, 18, and 16 such as the transporting device, the moving device, and the mounting head. The drive control commands of operations of respective devices 18 and 16 such as moving device and the mounting head are provided from the controller 92 and received by the optical radio device 1, which is in the moving device 18, by using the optical signal transmitted from the optical radio device 3 being connected to the control device 90.

In addition, as shown in Fig. 1, a pair of display devices 86 and 88 are provided on both side surfaces of the work machine 10 in the Y-axis direction. The respective display devices 86 and 88 display information relating to the mounting work through the mounting head 16 or the like and are a touch panel type display. The display devices 86 and 88 are connected to the controller 92 and operation results of touch buttons displayed on the display devices 86 and 88 are input. In addition, it is possible to display a variety of information via the control circuit 96.

In addition, the upper cover 21 is put in the work machine 10 as shown in Fig. 1. A transmission line of the optical radio transmission by the laser beam between the optical radio devices 1 and 3 inside the work machine 10 is covered with the upper cover 21. Accordingly, the laser beam and a light source are shielded to comply with safety consideration matters in the use of the laser beam with respect to the operator for performing such an adjustment work. Moreover, the opening and closing detection sensor 99 (refer to Fig. 4) is a sensor for detecting whether or not the work machine 10 in the interlock mechanism is covered with the upper cover 21, for example. When a normal operating state where the work machine 10 is covered with the upper cover 21 is detected by the opening and closing detection sensor 99, the emission intensity of the laser beam is set to be in a high output state required in the normal operating state. In addition, when a state where the transmission line of the optical signal of the work machine 10 is not covered is detected, the emission intensity of the laser beam is set to be in a low output state of class 1 with which safety consideration matters to comply are not required. Even in a case where the optical radio transmission is performed through the laser beam in the low output state, it is possible to transmit a variety of types of signals while maintaining a bit error rate indicating a communication quality via the optical radio devices 1 and 3. When forwarding or maintaining the work machine 10, it is possible to perform the adjustment work while maintaining the minimum required optical radio transmission.

In this case, under the condition in which the bit error rate is constant, the transmission rate is decreased in the radio transmission as the emission intensity of the laser beam is decreased. However, the reduction in transmission rate is the reduction within the range where an update frequency (the band) of data other than the image data or the signal necessary for a variety of devices is secured. For this reason, in the variety of devices, the update frequency of the data or the signal required in terms of the operation or control is maintained as in the normal operating state. During the adjustment work, it is possible to perform the adjustment in a state where the same operation is performed as in the normal operation while securing the safety for the worker by reducing the emission intensity of the laser beam. In this case, the transmission rate of the image data is decreased and the update frequency (the band) of a still image or the like is decreased, but, the data volume of the image data per frame is maintained in the same manner as in the normal operation. It is possible to perform the adjustment work while maintaining the image quality equivalent to that in the normal operating state. In addition, in this case, the update frequency (the band) of the moving image is inevitably decreased, but when the update frequency (the band) of the still image is low enough, even when the transmission rate of the image data is decreased, the image data forming the still image at the update frequency (the band) of the still image is transmitted. Therefore, it is possible to perform the adjustment work while maintaining the image quality equivalent to that in the normal operating state without decreasing the update frequency (the band) of the still image.

Incidentally, a power source for control and a power source for drive are provided in the work machine 10, in which the power source for drive is divided into a power source for the transporting device 14 and the supply device fixing mechanisms 76 and 78 and a power source for devices other than the transporting device 14 and the supply device fixing mechanisms 76 and 78. In other words, the work machine 10 is provided with three power sources, that is, a power source corresponding to the control device 90, a power source corresponding to the transporting device 14 and the supply device fixing mechanisms 76 and 78, and a power source corresponding to the moving device 18.

Then, in the work machine 10, with the above described configuration, the optical radio device 1 provided in the moving device 18 and the optical radio device 3 provided in the controller 92 are optically radio-transmitted. Accordingly, the image data processed by the image processing device 84 is transmitted toward the controller 92 from the moving device 18 and the drive control commands of operations of respective devices 18 and 16 such as the moving device and the mounting head are transmitted toward the moving device 18 from the controller 92.

Besides this, sensor signals from the detection sensor 98, the opening and closing detection sensor 99 and the like, command signals from a selection button 105, an operation button 107, and a radio button for selection 109, and signals from sensors (not shown) provided in a variety of types of the drive devices are transmitted to the control device 90. Thus, it is needless to say that it is possible to use the optical radio transmission even in a case where a variety of types of control signals, display data, and the like are transmitted to the display devices 86 and 88 from the control circuit 96 included in the control device 90.

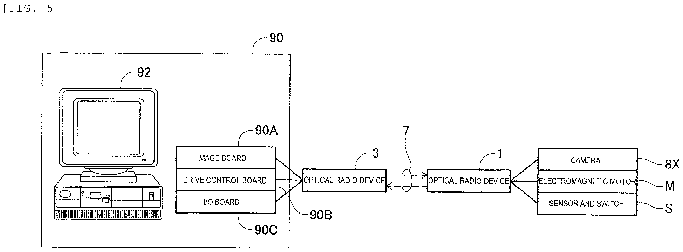

Fig. 5 is a diagram schematically illustrating configurations of the optical radio devices 1 and 3 which are provided in the work machine 10 according to the example and is a diagram schematically illustrating a configuration in which the optical radio devices 1 and 3 are provided between the variety of devices (a camera 8X, a motor M, a sensor and switch S, or the like described later) and the control device 90 in the work machine 10.

The control device 90 is controlled by the controller 92 configured of the computer system such as PC. The controller 92 is connected to one end of a transmission line 7 to which the optical radio device 3 is connected via an image board 90A, a drive control board 90B, and an I/O board 90C. The image board 90A is a board for controlling transmission and reception of the image data. The drive control board 90B is a board for controlling input and output of an operation command which is a command for operating the electromagnetic motor and servo control information such as torque information or the position information fed back from the electromagnetic motor. The I/O board 90C is a board for controlling a lamp display or transmission and reception of the signals from a variety of types of the sensors and switches.

The image board 90A, the drive control board 90B, and the I/O board 90C are connected to one end of the transmission line 7 via the optical radio device 3 and then the optical radio transmission is performed through the laser beam in the transmission line 7. The other end of the transmission line 7 is connected to the camera 8X, the electromagnetic motor M, and the sensor and switch S via the optical radio device 1. Here, the camera 8X is an imaging device illustrated as an example of the mark camera 80 or the part camera 82 and the electromagnetic motor M is the electromagnetic motors 26, 56, and 60 or other mobile devices as illustrated in Fig. 4. Meanwhile, the sensor and switch S is installed, for example, in the transporting device 14, the mounting head 16, the moving device 18 , the supply devices 20 and 22, and the display devices 86 and 88 (refer to Fig. 4) as necessary.

In the optical radio device 1 as illustrated in Fig. 5, the image data imaged by the camera 8X, the servo control information such as the torque information or the position information obtained by the electromagnetic motor M, and a variety of types of I/O signals output from the sensor and switch S are multiplexed and then are transmitted through the transmission line 7 as the optical radio signal. The transmitted multiplexed signals are received in the optical radio device 3 and then the multiplexing of the signals is released so as to separate signals into individual data. Among the separated data items, the image data is transmitted to the image board 90A, the servo control information is transmitted to the drive control board 90B, and the I/O signal is transmitted to the I/O board 90C.

The image data, the servo control information, and the I/O signal received in the optical radio device 3 are processed in the controller 92. A process result from the controller 92 is transmitted through the transmission line 7 from the drive control board 90B and the I/O board 90C via the optical radio device 3 as the operation command for controlling the electromagnetic motor M or other mobile devices, and a display signal controlling the display devices 86 and 88, and then the next control is performed with respect to the electromagnetic motor M or other mobile devices by the optical radio device 1.

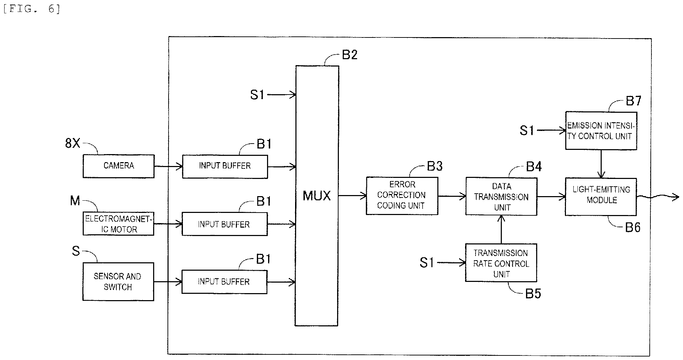

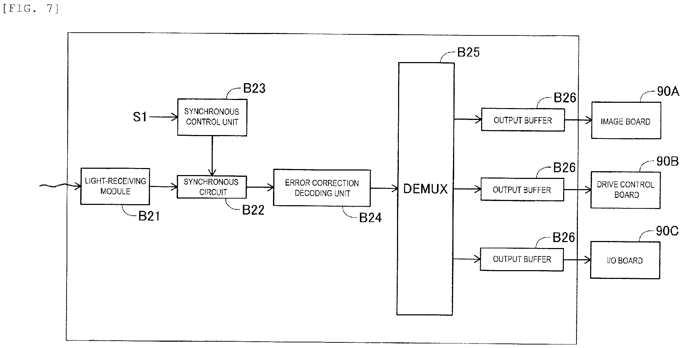

Fig. 6 is a block diagram illustrating a control device of the optical radio device 1 and Fig. 7 is a block diagram illustrating a control device of the optical radio device 3.

The block diagram (refer to Fig. 6) of the optical radio device 1 will be described. The image data transmitted from the camera 8X, the servo control information transmitted from electromagnetic motor M, and the I/O signal transmitted from the sensor and switch S are respectively incorporated into an input buffer B1.

The image data, the servo control information, and the I/O signal which are incorporated into the input buffer B1 are transmitted to a multiplexing unit (MUX) B2 via the input buffer B1. The multiplexing unit (MUX) B2 controls the ratio of multiplexing data in the normal operating state and the non-normal operating state by using a detection signal S1 output from the opening and closing detection sensor 99.

When notice is given of the normal operating state in which the work machine 10 is covered with the upper cover 21, in the multiplexing unit (MUX) B2, the image data, the servo control information, and the I/O signal, of which data volume is configured, in a packet, to satisfy the update frequency (the band) necessary for the variety of devices in the normal operating state, are transmitted to an error correction coding unit B3.

On the other hand, in the non-normal operating state in which the work machine 10 is not covered with the upper cover 21, the emission intensity of the laser beam is set to the low output state of class 1 with which safety consideration matters to comply are not required while the bit error rate indicating a communication quality maintains the same rate as in the normal operating state. In response to this, the transmission rate of the radio transmission is decreased. Here, the non-normal operating state is, for example, a state of the adjustment work when forwarding or maintaining the work machine 10. In this case, the servo control information and the I/O signal preferably secure the update frequency (the band) necessary for the variety of devices. This is because it is possible to operate the variety of devices in the same manner as in the normal operating state even when performing the adjustment work and to perform the adjustment work in the same state as the normal operating state. In a multiplexing unit (MUX) B2, with respond to the decrease in the transmission rate, the servo control information and the I/O signal are allocated to each packet so as to be transmitted at the band which satisfies the update frequency (the band) necessary for the variety of devices. As the transmission data volume per unit time is decreased according to the decrease in the transmission rate, adjustment of, for example, increasing the data volume per packet is performed. Note that as for the image data, it is possible to decrease the transmission rate in the normal operating state. However, also in this case, with the configuration for transmitting all of the image data items configuring a frame, regarding a still image, it is possible to maintain the image quality equivalent to that in the normal operating state. The multiplexed data is transmitted to the error correction coding unit B3.

The multiplexed data by the multiplexing unit (MUX) B2 is transmitted to a data transmission unit B4 after adding the error correcting code to the error correction coding unit B3. In the data transmission unit B4, the packet is configured to be transmitted. The data transmission unit B4 transmits the packet at transmission rates which are controlled to be different in each of the normal operating state and the non-normal operating state by a transmission rate control unit B5. A light-emitting module B6 converts the packet transmitted from the data transmission unit B4 into the optical signal and then transmits the optical signal to the transmission line 7. In this case, in the light-emitting module B6, the emission intensity of the laser beam is controlled to be different in each of the normal operating state and the non-normal operating state by an emission intensity control unit B7.

In the transmission rate control unit B5 and the emission intensity control unit B7, the control is performed according to the detection signal S1 outputted from the opening and closing detection sensor 99. The detection signal S1 is a signal notifying whether or not the work machine 10 is covered with the upper cover 21. When the notice is given of the normal operating state, the transmission rate which is set in advance by the transmission rate control unit B5 is set and the emission intensity of the laser beam which is set in advance by the emission intensity control unit B7 is set. On the other hand, when notice is given of the non-normal operating state, the transmission rate which is decreased by the transmission rate control unit B5 is set and the emission intensity of the laser beam which is decreased by the emission intensity control unit B7 is set in a range where the bit error rate is maintained in the optical radio transmission. The emission intensity of the laser beam is decreased to class 1 with which safety consideration matters to comply are not required.

The optical radio device 3 (refer to Fig. 7) on the receiving side will be described. The optical signal transmitted through the transmission line 7 is received in a light-receiving module B21 to be converted into an electrical signal. The electrical signal output from the light-receiving module B21 is detected by a synchronous circuit B22 for each bit and then extracted to the multiplexed data. A synchronous control unit B23 controls the synchronous circuit B22 by using the detection signal S1 output from the opening and closing detection sensor 99. The control is performed so that the synchronous circuit B22 is operated at transmission rates which are different in each of the normal operating state and the non-normal operating state.

The error of the extracted multiplexed data is detected and corrected by an error correction decoding unit B24. The error corrected multiplexed data is separated into the respective data items by a demultiplexing unit (DEMUX) B25.

The image data, the servo control information, and the I/O signal are transmitted to the image board 90A, the drive control board 90B, and the I/O board 90C via the respective output buffers B26.

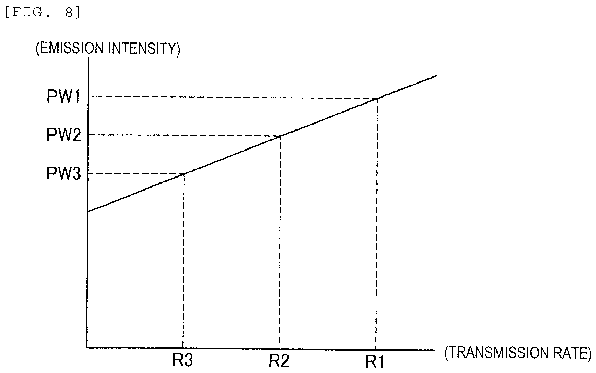

Fig. 8 is a diagram illustrating a correlationship between the transmission rate and the emission intensity of the laser beam in the optical radio devices 1 and 3 in a case where the bit error rate is set to be constant. In Fig. 8, an X-axis denotes the transmission rate which is the data volume capable of being transmitted per unit time and Y-axis denotes the emission intensity of the laser beam.

As shown in Fig. 8, in the relationship in which the bit error rate is maintained to be a constant, as the transmission rate between the optical radio devices 1 and 3 increases, there is a need for the high emission intensity for the laser beam. If the transmission rate is assumed to be the transmission rate R1 in the normal operating state, the emission intensity necessary for the data transmission becomes the emission intensity PW1 as illustrated in Fig. 8.

The emission intensity of the laser beam is set to be in a low output state of the class 1 with which safety consideration matters to comply are not required. In this case, as illustrated in Fig. 8, it is assumed that the emission intensity of the laser beam is emission intensity PW2 which is an upper limit of the class 1 and the transmission rate is a transmission rate R2. The transmission rate of the transmission rate R2 is decreased and the data volume capable of being transmitted between the optical radio devices 1 and 3 per unit time is decreased compared with the transmission rate R1 in the normal operating state.

In a case where the emission intensity is emission intensity PW3 lower than the emission intensity PW2, the transmission rate becomes a transmission rate R3 which is further lower than the transmission rate R2. The transmission rate R3 is assumed to be the minimum transmission rate necessary for securing the update frequency (the band) necessary for the variety of devices when transmitting the servo control information and the I/O signal other than the image data. In this case, in order to maintain the update frequency (the band) of the servo control information and the I/O signal, the transmission of the image data is set to be in a suspended state.

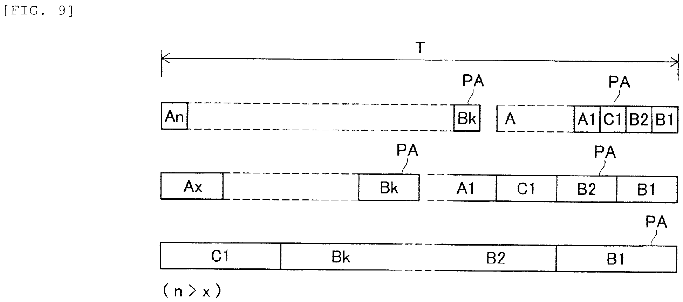

Fig. 9 illustrates a configuration example of the packet PA in each of the transmission rates R1, R2, and R3. The data included in the packet PA is the image data A, the servo control information B, and the I/O signal C. The servo control information B and the I/O signal C are the data and signals required in terms of the operation or control in the variety of devices and it is necessary to ensure the update frequency (the band) necessary for the variety of devices. In Fig. 9, pieces of k-bits servo control information B1 to Bk per unit time T and one-bit I/O signal C1 are used as the update frequency (the band).

In the transmission rate R1 which is the transmission rate in the normal operating state, the pieces of k-bits drive control information B1 to Bk, the one-bit I/O signal C1, and items of image data A1 to An of n bits are transmitted.

In the non-normal operating state, the emission intensity of the laser beam is decreased to the emission intensity PW2 which is the upper limit of the class 1, and even when the transmission rate is decreased to the transmission rate R2 corresponding to this reduction, similar to the transmission rate R1 in the normal operating state, the pieces of k-bits drive control information B1 to Bk and the one-bit I/O signal C1 are transmitted at the unit time T, thereby the updated band necessary for the variety of devices being meaintained. On the other hand, as for the image data, items of image data A1 to Ax of x (x < n) bits are transmitted at the unit time T. Regarding the image data A, the updated band is decreased and the update frequency of the still image is decreased compared with the normal operating state, but if the data volume configuring frames is not changed, it is possible to make the image quality equivalent to the image quality in the normal operating state.

In the transmission rate R3, similar to the transmission rates R1 and R2, it is possible to perform the transmission of the pieces of k-bits drive control information B1 to Bk and of the one-bit I/O signal C1 at the unit time T. In this case, the transmission of the image data is suspended. It is preferable when the image data is not particularly necessary for the adjustment work.

According to the present example, in the non-normal operating state, it is possible to decrease the transmission rate and the emission intensity of the laser beam in the range where the transmission rates are R2 and R3 in Fig. 8 and the emission intensities are PW2 to PW3 corresponding to the transmission rates. When the reduction is realized in this range, it is possible to decrease the emission intensity of the laser beam to the class 1 while maintaining the bit error rate according to the transmission, the update frequency (the band) of data other than the image data, or a signal necessary for the variety of devices as the same state as in the normal operation state. Accordingly, it is possible to perform the adjustment work in the same state as the normal operating state while securing the safety for the worker.

As described in detail, according to the present example, in the optical radio device 1 included in the work machine 10, the notice is given of the non-normal operating state where the transmission line of the optical signal of the work machine 10 is not covered by the detection signal S1 output from the opening and closing detection sensor 99. In this case, the transmission rate control unit B5 and the emission intensity control unit B7 decrease the transmission rate while maintaining the bit error rate which is set in advance of the radio transmission in the normal operating state, and perform reduction of the emission intensity of the laser beam to the class 1 with which safety consideration matters to comply are not included. Therefore, in the non-normal operating state, it is possible to perform the radio transmission at the same bit error rate as in the normal operating state, and to decrease the emission intensity of the optical signal to the emission intensity based on the safety standards while maintaining the communication quality of the radio transmission.

In addition, in the optical radio device 1 included in the work machine 10, the notice is given of the non-normal operating state. In this case, in the multiplexing unit (MUX) B2, the ratio of the respective items of data configuring the packet is controlled so as to decrease the band of the image data while maintaining the update frequency (the band) necessary for the device of the servo control information and the I/O signal. Therefore, the drive control information and the I/O signal are transmitted at a band of the data and signals required in terms of the operation or control in the variety of devices and it is possible to secure the update frequency (the band) necessary for the variety of devices as in the normal operating state. Accordingly, in the non-normal operating state, even with the low transmission rate and the emission intensity, it is possible to perform the radio transmission of data necessary for the operation of the device as in the normal operating state.

Further, in the transmission rate R3, the servo control information and the I/O signal are the minimum required transmission rate for the update frequency (the band) and the emission intensity of the laser beam is decreased to the minimum required value. In this case, in order to maintain the update frequency (the band) of the servo control information and the I/O signal, the transmission of the image data is set to be in a suspended state in the multiplexing unit (MUX) B2. Accordingly, it is possible to sufficiently decrease the emission intensity while securing the update frequency (the band) of data necessary for the device.

In addition, in the opening and closing detection sensor 99 included in the work machine 10, it is possible to detect the non-normal operating state by detecting whether or not the work machine 10 is covered with the upper cover 21.

Note that the present invention is not limited to the above described examples, but may be performed in various aspects applied with various modifications and improvements by those who are skilled in the art. For example, in the embodiment, the detection of the normal operating state and the non-normal operating state are not limited to be performed by the opening and closing detection sensor 99. The detection of the normal operating state and the non-normal operating state may be performed by the selection button 105, the operation button 107, the radio button for selection 109, or the like provided in the display devices 86 and 88 other than the opening and closing detection sensor 99.

In the example, the servo control information and the I/O signal are illustrated as examples, but the present application is not limited thereto. It is possible to apply the same configuration to a case of the optical radio transmission of the drive control command of operation of the respective devices 18 and 16 such as the moving device and the mounting head, the command signal from the selection button 105, the operation button 107, and the radio button for selection 109, and the signal from sensor (not shown) which is installed in a variety of types of drive devices or the like and thus the same effect can be achieved as a matter of course.

Incidentally, according to the above described examples, the panel work machine 10 is an example of the electric apparatus and the data transmission unit, the transmission rate control unit B5 are examples of a transmission rate setting unit, the light-emitting module B6 is an example of the light-emitting unit, the light-receiving module B21 is an example of the light-receiving unit, and the upper cover 21 is an example of the shielding member.

### Reference Sign List

- 1, 3:: OPTICAL RADIO DEVICE
- 7:: TRANSMISSION LINE
- 10:: PANEL WORK MACHINE
- 8X:: CAMERA
- M:: ELECTROMAGNETIC MOTOR
- S:: SENSOR AND SWITCH
- 90:: CONTROL DEVICE
- 90A:: IMAGE BOARD
- 90B:: DRIVE CONTROL BOARD
- 90C:: I/O BOARD
- 92:: CONTROLLER

## Claims

1. An electric apparatus (10) for radio-transmitting signals between devices by using an optical signal, the apparatus comprising:
a transmission rate setting unit (B5) configured to set the transmission rate of the signal transmission;
a light-emitting unit (B6) configured to emit an optical signal;
a light-receiving unit (B21) configured to receive the optical signal;
an emission intensity control unit (B7) configured to control emission intensity of the optical signal emitted from the light-emitting unit (B6); and
notification means for notifying a non-normal operating state,
**characterized in that**
in the signal transmission, a signal pertaining to image data (A) and other signals are multiplexed into an optical signal,
the transmission rate setting unit (B5) and the emission intensity control unit (B7) are configured to, according to the notification means, decrease the transmission rate and the emission intensity of the optical signal while maintaining a bit error rate of the radio transmission set in a normal operating state, whereby the transmission rate of image data is decreased whilst the transmission rate of the aforementioned other signals is maintained, and an update frequency of a still image formed by the image data is decreased compared with the normal operating state.

2. The electric apparatus (10) according to claim 1,
wherein the decrease in the transmission rate includes a suspension of the transmission of image data.

3. The electric apparatus (10) according to any one of claims 1 to 2, further comprising:
a shielding member (21) that shields an optical path of the optical signal used for the light-emitting unit (B6), the light-receiving unit (B21), and the radio transmission,
wherein the notification means includes an opening and closing detection sensor (99) which is configured to detect an opening and closing state of the shielding member (21).

## Patentansprüche

1. Elektrische Vorrichtung (10) zum Übertragen von Signalen mittels Funk zwischen Einrichtungen unter Verwendung eines optischen Signals, wobei die Vorrichtung umfasst:
eine Einheit (B5) zum Einstellen der Übertragungsgeschwindigkeit, die so konfiguriert ist, dass sie die Übertragungsgeschwindigkeit der Signalübertragung einstellt;
eine Einheit (B6) zum Emittieren von Licht, die so konfiguriert ist, dass sie ein optisches Signal emittiert;
eine Einheit (B21) zum Empfangen von Licht, die so konfiguriert ist, dass sie das optische Signal empfängt;
eine Einheit (B7) zum Steuern von Emissions-Intensität, die so konfiguriert ist, dass sie Emissions-Intensität des von der Einheit (B6) zum Emittieren von Licht emittierten optischen Signals steuert; und
eine Benachrichtigungseinrichtung zum Benachrichtigen über einen nicht normalen Betriebszustand,
**dadurch gekennzeichnet, dass**
bei der Signalübertragung ein Signal, das Bilddaten (A) betrifft, und andere Signale zu einem optischen Signal multiplexiert werden,
die Einheit (B5) zum Einstellen der Übertragungsgeschwindigkeit und die Einheit (B7) zum Steuern von Emissions-Intensität so konfiguriert sind, dass sie entsprechend der Benachrichtigungseinrichtung die Übertragungsgeschwindigkeit und die Emissions-Intensität des optischen Signals verringern und dabei eine in einem normalen Betriebszustand eingestellte Bitfehlerrate der Funkübertragung beibehalten, so dass die Übertragungsgeschwindigkeit von Bilddaten verringert wird, während die Übertragungsgeschwindigkeit der anderen Signale aufrechterhalten wird, und eine Aktualisierungs-Frequenz eines durch die Bilddaten erzeugten Standbildes gegenüber dem normalen Betriebszustand verringert wird.

2. Elektrische Vorrichtung (10) nach Anspruch 1,
wobei die Verringerung der Übertragungsgeschwindigkeit eine Aussetzung der Übertragung von Bilddaten einschließt.

3. Elektrische Vorrichtung (10) nach einem der Ansprüche 1 bis 2, die des Weiteren umfasst:
ein Abschirmelement (21), das einen optischen Weg des optischen Signals abschirmt, der für die Einheit (B6) zum Emittieren von Licht, die Einheit (B21) zum Empfangen von Licht und die Funkübertragung genutzt wird,
wobei die Benachrichtigungseinrichtung einen Sensor (99) zur Erfassung von Öffnen und Schließen enthält, der so konfiguriert ist, dass er einen geöffneten und geschlossenen Zustand des Abschirmelementes (21) erfasst.

## Revendications

1. Appareil électrique (10) destiné à transmettre par radio des signaux entre des dispositifs en utilisant un signal optique, l'appareil comprenant:
une unité de réglage de débit de transmission (B5) configurée pour régler le débit de transmission de la transmission de signal,
une unité d'émission de lumière (B6) configurée pour émettre un signal optique,
une unité de réception de lumière (B21) configurée pour recevoir le signal optique,
une unité de commande d'intensité d'émission (B7) configurée pour réguler l'intensité d'émission du signal optique émis par l'unité d'émission de lumière (B6), et
un moyen de notification permettant de signaler un état de fonctionnement anormal,
**caractérisé en ce que**
dans la transmission de signal, un signal appartenant à des données d'image (A) et d'autres signaux sont multiplexés dans un signal optique,
l'unité de réglage de débit de transmission (B5) et l'unité de commande d'intensité d'émission (B7) sont configurées pour diminuer, en fonction du moyen de notification, le débit de transmission et l'intensité d'émission du signal optique tout en maintenant un taux d'erreur sur les bits de la transmission radio établi dans un état de fonctionnement normal, grâce à quoi le débit de transmission des données d'image est diminué bien que le débit de transmission des autres signaux mentionnés ci-dessus soit maintenu, et la fréquence de mise à jour d'image immobile formée par les données d'image est diminuée par comparaison avec l'état de fonctionnement normal.

2. Appareil électrique (10) selon la revendication 1, dans lequel la diminution du débit de transmission inclut la suspension de la transmission des données d'image.

3. Appareil électrique (10) selon l'une quelconque des revendications 1 et 2, comprenant en outre:
un élément de blindage (21) qui protège de trajet optique du signal optique utilisé pour l'unité d'émission de lumière (B6), l'unité de réception de lumière (B21) et la transmission radio,
dans lequel le moyen de notification inclut un capteur de détection d'ouverture et de fermeture (99) qui est configuré pour détecter un état d'ouverture et de fermeture de l'élément de blindage (21).
